# EUROPÄISCHE PATENTANMELDUNG

(11) **EP 1 809 001 A1**
(43) Veröffentlichungstag der Anmeldung: **18.07.2007**
(21) Anmeldenummer: 06000639.2
(22) Anmeldetag: 12.01.2006
(51) Int. Cl.: H04L 29/08, H04L 29/06

(54) **Verfahren und Vorrichtung zur Registrierung in einem IMS mit einer GRUU**

(71) Anmelder: SIEMENS AKTIENGESELLSCHAFT, 80333 München (DE)
(72) Erfinder: Leis, Peter, 82377 Penzberg (DE)

(57) **Zusammenfassung**

Eine einfache und effiziente Teilnehmer- Registrierung von mehreren Endgeräten eines Teilnehmers aus, die eine Unterscheidung der Endgeräte des Teilnehmers in einem von einem S-CSCF-Server informierten Applikations-Server erlaubt wird ermöglicht durch ein Verfahren zur Registrierung (Register_1, Register_1_GRUU_1, Register_2, Register 2 GRW 2) in einem zellularen Mobilfunknetz (S-CSCF, Applikations-Server), **dadurch gekennzeichnet**, dass von einem Endgerät (UE_1) eines Teilnehmers ("Public ID X") an einen S-CSCF-Server (S-CSCF) eine die Teilnehmeridentität des Teilnehmers betreffende Teilnehmeridentitätsinformation ("public ID-X") und eine dieses Endgerät (UE_1) betreffende Endgerät-Kontaktinformation enthaltende SIP-Registrierungsnachricht (Register_1) gesendet wird,
worauf der S-CSCF-Server an einen Applikations-Server eine Nachricht (Register_1_GRUU_1) sendet, welche die Endgerätkontaktinformation (contact_1, repräsentiert durch eine GRUU) betreffend das Endgerät (UE_1) und eine die Teilnehmeridentität des Teilnehmers betreffende Teilnehmeridentitätsinformation(public_ID_X) enthält.

## Beschreibung

Die Erfindung betrifft ein Verfahren zur Registrierung eines Teilnehmers in einem zellularen Mobilfunknetz.

Im aus 3GPP bekannten (www.3gpp.org), SIP- basierten (SIP = Session Initiation Protocol) IM (IM = Intelligent Multimedia) Core Network Subsystem (IMS) meldet sich ein Teilnehmer mit einer so genannten "SIP REGISTER" Nachricht im Netzwerk an und signalisiert so seine Bereitschaft zur Kommunikation. Diese SIP REGISTER Nachricht wird im Netzwerk in einer S-CSCF ("Serving Call Session Control Function") bearbeitet und terminiert. Die S-CSCF implementiert hierfür die Rolle eines so genannten SIP Registrar (siehe RFC 3261). Beginnend mit dem Rel-6 kann ein Teilnehmer die gleiche öffentliche Adresse, im IMS Public User Identity (Public ID X) genannt, von mehreren Endgeräten aus im Mobilfunknetz registrieren. Dieses feature wird als shared public user ID bezeichnet.

Die in der S-CSCF vorhandene Registrierungs-Information des Teilnehmers wird auch von anderen Knoten im Netz benötigt um entsprechende Dienste anbieten zu können. Beispiel hierfür sind Applikations-Server die an die S-CSCF angeschlossen sind.

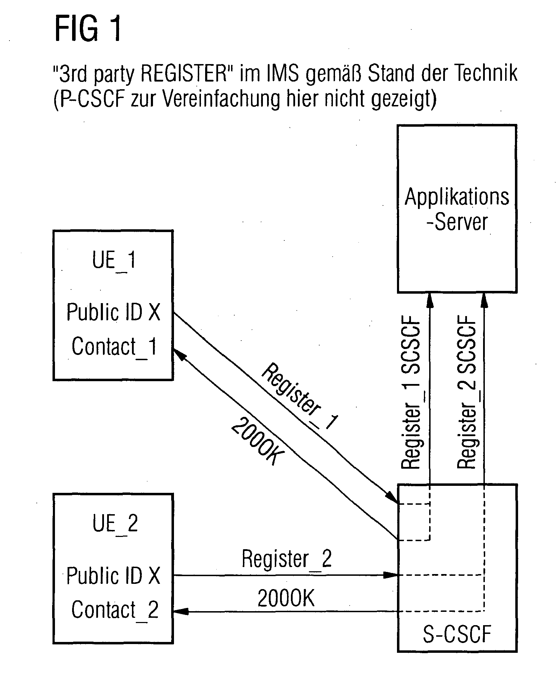

Eine Möglichkeit, im SIP- basierten IMS diese Registrierungs-information von der S-CSCF an den Applikations-Server zu senden, ist das so genannte "3^{rd} party REGISTER" Verfahren, das in der 3GPP TS 24.229 beschrieben ist. Hierbei sendet die S-CSCF bei Erhalt einer REGISTER Nachricht vom Teilnehmer eine daraus abgeleitete REGISTER Nachricht an die entsprechenden Applikations-Server (s. a. Fig. 1).

Die 3^{rd} party REGISTER Nachricht ist in 3GPP TS 24.229 wie folgt beschrieben
- To header: public user identity wie in der REGISTER Nachricht vom UE erhalten
- Contact header: gesetzt auf die SIP URI der S-CSCF's
- Expires header: enthält den Wert, wie er von der S-CSCF in der 200 (OK) response Nachricht an das Endgerät UE zurückgesendet wird.

Das heißt, in einer 3^{rd} party REGISTER Nachricht ist immer die S-CSCF als Kontakt für eine public user ID angegeben, d.h. der Applikations-Server hat keine Information über den wahren Kontakt, d.h. eine Adresse die das Endgerät beschreibt.

Daraus ergeben sich folgende Probleme:
A) Beim feature "shared public user ID" hat der Teilnehmer die Möglichkeit, eine public user ID von verschiedenen Endgeräten gleichzeitig im IMS zu registrieren. Aber ein Applikations-Server kann anhand der 3^{rd} party REGISTER nicht erkennen, dass die 3^{rd} party REGISTER von der Registrierung der gleichen public user ID durch unterschiedliche Endgeräte getriggert wurde, da dafür kein Parameter vorgesehen ist. Anstatt dessen enthalten die 3^{rd} party REGISTER immer die S-CSCF Adresse als Kontakt- Information und die public user ID im To header als public user ID für die diese Registrierung gültig ist. Die IP Adresse des Teilnehmers kann als Kontakt nicht an den Applikations-Server gegeben werden, da diese Adresse von einem IMS Operator nicht an Betreiber von Applikations-Servern weitergegeben wird (wegen erforderlicher privacy, IP adress hiding, und/oder auch um zu verhindern, dass der AS direkt ohne IMS das Endgerät ansprechen kann). Wenn ein Teilnehmer die gleiche public user ID von mehreren Endgeräten aus registriert, dann ist die Registrierungsinformation für den Applikations-Server (AS) nicht mehr eindeutig, für den AS sehen diese 3^{rd} party REGISTER immer gleich aus, mit public user ID als request URI und contact auf S-CSCF gesetzt. Wenn der Teilnehmer z.B. eine public user ID von 2 Endgeräten registriert hat und nun ein Endgerät deregistriert ,dann hat die daraus resultierende 3^{rd} party REGISTER Nachricht einen expires header mit Wert "0". Dadurch ist die gesamte Registrierung der public user ID im Applikations-Server gelöscht, da der Applikations-Server nicht weiß, ob noch weitere Registrierungen bestehen.
B) Der Applikations-Server kann kein spezielles Endgerät, d.h. keine spezielle Instanz der public user ID ansprechen, da er anhand des 3^{rd} party REGISTER nicht erkennen kann, dass eine public user ID von mehreren Endgeräten benutzt wird. Dies bedeutet, der Applikations-Server kann nicht erkennen von welchem Endgerät die public user ID angemeldet wird.

Aufgabe der der vorliegenden Erfindung ist es, bei einer möglichen Registrierung eines Teilnehmers von mehreren Endgeräten aus in einem zellularen Mobilfunknetz unter Verwendung eines CSCF-Servers möglichst effizient und zuverlässig eine Unterscheidungsmöglichkeit für die Registrierungen durch die mehreren Endgeräte dieses Teilnehmers in einem Applikations-Server zu ermöglichen. Die Aufgabe wird jeweils durch die Gegenstände der unabhängigen Patentansprüche gelöst.

Um detaillierte Daten bezüglich des Registrierungsstatus zu erhalten, kann ein Applikations-Server sich auf das so genannte reg-event package (RFC 3680) wie in 3GPP TS 24.229 beschrieben, subskribieren. In den daraus resultierenden NOTIFY Nachrichten erhält der Applikations-Server den genauen Registrierungszustand des Teilnehmers, d.h. er weiß, wie viele Registrierungen für eine public user ID vorliegen.

Eine Möglichkeit, die einzelnen Endgeräte, die sich eine public user ID teilen, d.h. eine Instanz Endgerät/public user ID, vom Applikations-Server aus anzusprechen ist bisher im 3GPP Standard nicht möglich.

Die Übersendung von Endgerätkontaktinformationen (beispielsweise Adressinformationen wie GRUU-Globally Routable User URI) in einer SIP-Registrierungsnachricht eines Teilnehmers an einen S-CSCF-Server eines Telekommunikationsnetzes und Übergabe (auch) dieser Endgeräte-Kontaktinformation vom CSCF-Server an einen Applikations-Server ermöglicht einfach und effizient eine Unterscheidung mehrerer Endgeräte eines Teilnehmers anhand deren dem Applikations-Server mitgeteilten (GRUU) Kontaktinformation.

Erfindungsgemäß kann die S-CSCF beim Senden der 3^{rd} party REGISTER Nachricht an den Applikations-Server eine so genannte GRUU ("globally routable user URI", siehe draft-ietf-sipgruu) im contact header als Kontakt- Information nutzen. Dadurch erhält der Applikations-Server eine Möglichkeit mehrere ₃^{rd} party REGISTER für eine public user ID eindeutig zu unterscheiden.

Für das Verfahren zur Erzeugung der GRUU bzw. dafür in welcher funktionalen Einheit die GRUU generiert wird gibt es eine Vielzahl von vorstellbaren Möglichkeiten.

Wichtig für das hier beschriebene Verfahren ist, dass die Endgeräte den GRUU Mechanismus entsprechend draft-ietf-sipgruu unterstützen.

Wenn jetzt ein Endgerät eine public user ID im IMS anmeldet und den support von GRUU anzeigt, dann würde die S-CSCF, die diese REGISTER Nachricht erhält eine 3^{rd} party REGISTER mit neuer Information an die entsprechenden Applikations-Server senden. Eine entsprechende 3^{rd} party REGISTER Nachricht von der S-CSCF zu einem Applikations-Server würde folgende Information in den header's enthalten:
- "Request URI": auf SIP Adresse des Applikations-Server
- "To": public user ID des Teilnehmer
- "From": auf SIP Adresse der S-CSCF setz
- "Contact": GRUU, die für diese Instanz erzeugt wurde

Durch die neue Information im Contact header (d.h. die GRUU) kann der Applikations-Server eindeutig ein "binding" (Verknüpfung) zwischen der GRUU und der angemeldeten public user ID herstellen, er kann dieser Registrierung auch einen eindeutigen Kontakt zuordnen.

Meldet jetzt der Teilnehmer ein anderes Endgerät mit der gleichen public user ID an, dann resultiert daraus eine 3^{rd} party REGISTER mit einer neuen GRUU. Dadurch kann der Applikations-Server die Endgeräte, die mit der gleichen public u-ser ID angesprochen werden können, eindeutig unterscheiden. D.h. er kann die zu den unterschiedlichen Endgeräten/Kontakten gehörenden Datensätze eindeutig zuweisen.

Mittels der GRUU kann der Applikations-Server Endgeräte auch eindeutig adressieren. Hierfür kann er die GRUU als request URI in einer SIP Nachricht benutzen und eine Session aufbauen z.B. um einen Service zu ermöglichen.

Aus der erfindungsgemäßen Implementierung können sich folgende Vorteile ergeben:
1. Ein Applikations-Server erhält die Möglichkeit, bei ihm ankommende 3^{rd} party REGISTER's mit der gleichen public user ID eindeutig zu unterscheiden, d.h. die public user ID wird von verschiedenen Endgeräten registriert. Die Implementierung des Applikations-Servers vereinfacht sich, da er jetzt auf Subskribierung auf das reg-event package verzichten kann um herauszufinden, ob für die vorliegende public user ID mehrere Kontakte/Endgeräte angemeldet sind.
2. Der Applikations-Server erhält die Möglichkeit eine spezielle Instanz einer Registrierung anzusprechen. D.h. er kann für den Fall, dass eine public user ID von mehreren Endgeräten angemeldet wird, dediziert ein Endgerät ansprechen. Da die Endgeräte unterschiedliche Service- Eigenschaften besitzen können (z.B. support von Video), ist diese Möglichkeit für den Applikations-Server sehr wichtig, wenn er bestimmte Services für den Teilnehmer realisieren will.

Weitere Merkmale und Vorteile ergeben sich aus den Patentansprüchen und der nachfolgenden Beschreibung eines Ausführungsbeispiels anhand der Zeichnung. Dabei zeigt

Figur 1 eine heute mögliche Registrierung von zwei Endgeräten UE_1, UE_2 eines Teilnehmers mit einem S-CSCF-Server eines Mobilfunknetzes und Registrierung des Teilnehmers bei einem Applikations-Server,

Figur 2 eine erfindungsgemäße Registrierung zweier Endgeräte eines Teilnehmers bei einem S-CSCF-Server und Registrierung der beiden Endgeräte durch ihre Kontaktinformationen bei einem Applikations-Server.

Figur 1 zeigt zwei Endgeräte UE_1, UE_2 eines Teilnehmers, wobei das Endgerät UE_1 eine die Identität des Teilnehmers (in die Endgeräte UE_1, UE_2 gehören) repräsentierende Teilnehmeridentität "Public ID X" repräsentierende Angabe und eine das Endgerät betreffende Kontaktinformation "contact_1" (beispielsweise eine Endgeräts-Identität) gespeichert hat. Bei einer Registrierung des Endgerätes UE_1 mit einer Nachricht "REGISTER_1" bei einem S-CSCF-Server eines Telekommunikationsnetzes werden die Teilnehmeridentitäts-Angabe "Public ID X" und eine das Endgerät UE_1 betreffende Endgerätkontaktinformation "contact_1" in einer Nachricht "REGISTER-1" gesendet. Vom S-CSCF-Server wird hierzu eine Bestätigung "200 OK" an das Endgerät UE_1 zurückgesendet.

Der S-CSCF-Server kann mit einer Nachricht "REGISTER_1_S_CSCF" an einen Applikations-Server diesem die Teilnehmeridentitätsangabe "Public ID X" und die SIP-URI-Adresse des S-CSCF senden. Entsprechendes gilt für eine Registrierung des Endgerätes UE_1 bei dem S-CSCF-Server. Der Applikations-Server kann bei einer derartigen Registrierung zweier Endgeräte desselben Nutzers (Public ID X) nicht unterscheiden, ob die Registrierung vom gleichen Endgerät oder von unterschiedlichen Endgeräten erfolgt und fragt deshalb mit "3^{rd} party REGISTER"-Nachricht hiernach beim S-CSCF bezüglich der Endgerätidentitäten an.

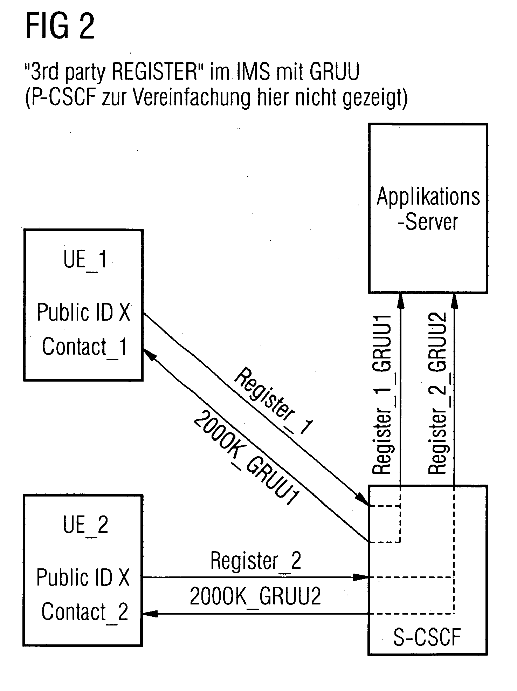

Im erfindungsgemäßen Ausführungsbeispiel in Figur 2 ("3rd party REGISTER" im IMS mit GRUU) wird dargestellt, wie eine "Public user ID X" zunächst vom Endgerät UE_1 im IMS registriert wird (Register_1, Register_1_GRUU1); anschließend wird diese public user ID auch von einem zweiten Endgerät UE_2 angemeldet. Die REGISTER Nachrichten zeigen den support für den GRUU Mechanismus an. Dadurch wird im IMS core (IMS Kernnetz) die Generierung einer GRUU für die jeweilige Registrierung angestoßen und die so erzeugten eindeutigen GRUUs werden den beiden Endgeräten in den 200 OK Nachrichten (2000K_GRUU1, 2000K_GRUU2) mitgeteilt. Zusätzlich werden GRUU_1 und GRUU_2 in den 3^{rd} party REGISTER Nachrichten (REGISTER_1_GRUU1, REGISTER_2_GRUU2), die zum Applikations-Server gesendet werden jeweils als Kontaktinformation im Contact header der Nachrichten gesendet. Der Applikations-Server hat nun ausreichende Informationen, um die beiden Registrierungen zu unterscheiden und kann bei Bedarf auch entweder UE_1 oder auch UE_2 eindeutig gezielt ansprechen (und insbesondere auch adressieren).

Somit ermöglicht die Erfindung eine effiziente Unterscheidung von mehreren Endgeräten eines Teilnehmers der von den mehreren Endgeräten aus jeweils über eine S-CSCF in einem Applikations-Server registriert wird.

## Patentansprüche

1. Verfahren zur Teilnehmer-Registrierung (Register_1, Register_1_GRUU_1, Register_2, Register_2_GRUU_2) in einem zellularen Mobilfunknetz (S-CSCF, Applikations-Server), **dadurch gekennzeichnet, dass** von einem Endgerät (UE_1) eines Teilnehmers (Public ID X) an einen S-CSCF-Server (S-CSCF) jeweils eine die Teilnehmeridentität des Teilnehmers betreffende Teilnehmeridentitätsinformation (Public ID X) und eine dieses Endgerät (UE_1) betreffende Endgerät-Kontaktinformation (GRUU_1) enthaltende SIP-Registrierungsnachricht (Register_1) gesendet wird, worauf der S-CSCF-Server an einen Applikations-Server eine Nachricht (Register_1_GRUU_1) sendet, welche die Endgerätkontaktinformation (contact_1) betreffend das Endgerät (UE_1) und die Teilnehmeridentitätsinformation(Public ID X) enthält.

2. Verfahren nach Anspruch 1, **dadurch gekennze ichnet**, dass die Endgerät-Kontaktinformation ("contact_1") eine "globally routable user URI" ist.

3. Verfahren nach einem der vorhergehenden Patentansprüche, **d adurch gekennzeichnet**, dass die die Teilnehmeridentität angebende Teilnehmeridentitätsinformation eine "public user ID" des Teilnehmers ist.

4. Verfahren nach einem der vorhergehenden Ansprüche, **dadu rch gekennzeichnet**, dass der S-CSCF-Server ein "serving call session control function" Server ist.

5. Verfahren nach einem der vorhergehenden Ansprüche, **dadu rch gekennzeichnet**, dass mehrere Endgeräte (UE_1, UE_2) eines Teilnehmers mit unterschiedlicher Endgerätkontaktinformationen (contact _1, contact_2) und gleichen Teilnehmeridentitätsinformationen (Public ID X) im Telekommunikationsnetz registriert werden.

6. Verfahren nach einem der vorhergehenden Patentansprüche, **d adurch gekennzeichnet**, dass der Applikations-Server mehrere Endgeräte (UE_1, UE_2) eines Teilnehmers, die die gleiche Teilnehmeridentifikationsinformation (Public ID X) verwenden, anhand ihrer zueinander unterschiedlichen Endgerätekontaktinformation (contact_1, contact_2) unterscheidet.

7. Verfahren nach Anspruch 6, **dadurch gekennze ichnet**, dass der Applikations-Server die Endgeräte (UE_1, UE_2) unterscheidet unter Verzicht auf eine Rückfrage mit einer "reg-event"-Nachricht bei einem S-CSCF-Server.

8. Verfahren nach einem der vorhergehenden Ansprüche, **dadu rch gekennzeichnet**, dass der S-CSCF-Server mit einer Einrichtung zum Empfangen von Nachrichten (REGISTER-1, REGISTER-2) von Endgeräten (UE_1, UE_2) mit gleichen Teilnehmeridentitätsangaben (Public ID X) und unterschiedlichen die Identität der Endgeräte (UE_1, UE_2) repräsentierenden Endgerät-Kontaktinformationen (contact_l, contact_2) und mit einer Einrichtung zum Senden von die Teilnehmeridentitäts-Angaben (Public ID X) und Endgerät-Kontaktinformations-Angaben (contact_1, contact_2) an einen Applikations-Server aufweist.

9. Applikations-Server mit einer Einrichtung zum Empfangen von Nachrichten (REGISTER_1_GRUU1, REGISTER_2_GRUU2) eines S-CSCF-Servers und einer Einrichtung zum Unterscheiden von unterschiedlichen Endgeräten (UE_1, UE_2) mit gleicher Teilnehmer-Identitätsangabe (Public ID X) anhand von in den Nachrichten (REGISTER_1_GRUU1, REGISTER_2_GRUU2) enthaltenen die Endgeräte betreffenden Endgerät-Kontaktinformationen (contact_1, contact_2).
